# EUROPEAN PATENT SPECIFICATION

(11) **EP 1 650 011 B1**
(45) Date of publication and mention of the grant of the patent: **09.07.2008**
(21) Application number: 04733626.8
(22) Date of filing: 18.05.2004
(51) Int. Cl.: B29D 30/06, B60C 17/06, B21H 1/10

(54) **DEVICE FOR MANUFACTURING SUPPORT BODY FOR RUN FLAT TIRES**
VORRICHTUNG ZUR HERSTELLUNG EINES STÜTZKÖRPERS FÜR NOTLAUFREIFEN
DISPOSITIF DE FABRICATION D'UN CORPS DE SUPPORT DE PNEUMATIQUE A AFFAISSEMENT LIMITE

(30) Priority: 22.07.2003 JP 2003277683
(43) Date of publication of application: 26.04.2006
(73) Proprietor: THE YOKOHAMA RUBBER CO., LTD., Tokyo 105-8685 (JP)
(72) Inventor: SANO, Takuzo The Yokohama Rubber Co., Ltd., Hiratsuka-shi, Kanagawa 254-8601 (JP); TAKADA, Noboru The Yokohama Rubber Co., Ltd., Hiratsuka-shi, Kanagawa 254-8601 (JP)
(74) Representative: HOFFMANN EITLE
(86) International application number: PCT/JP2004/006641
(87) International publication number: WO 2005/007391

(56) References cited:
- EP-A- 1 484 440
- DE-C1- 10 149 086
- JP-A- 10 297 226
- JP-A- 48 076 202
- JP-A- 59 209 438
- JP-Y2- 56 003 070
- US-A- 5 212 866
- US-A- 5 950 472

## Description

### TECHNICAL FIELD

The present invention relates to a device for manufacturing a support body for run flat. More specifically, the present invention relates to a device for manufacturing a support body for run flat that can achieve stable provision of annular shells with highly accurate dimensions.

### BACKGROUND ART

There are many run-flat technologies that have been proposed for enabling a vehicle to continue traveling for several hundred kilometers even after pneumatic tires have been punctured during traveling. Among these proposals, as shown in Fig. 5, JP 10-297226 proposes a structure in which an annular support body 32 is attached on a rim 30 provided inside the hollow space of a pneumatic tire 31 incorporated in the rim and thereby the annular support body 32 supports the flat tire 31 to make run-flat driving possible. The support body 32 for run flat is constituted in such a way that elastic rings 34, 34 such as rubber are attached to both ends of an annular shell 33 that has outwardly protruding parts 33a, 33a on its periphery. Before use, the support body 32 for run flat is coaxially attached to the rim 30 with an existing structure. For this reason, there is an advantage that the support body 32 for run flat can be used as it is without making a substantial modification to the existing wheel/rim structure.

Since the annular shell 33 constituting the support body for run flat serves to support a vehicle during run-flat driving, there is a problem that the dimensional accuracy of the annular shell 33 influences ride quality. Conventional molding devices that have been proposed for providing such an annular shell include the device described in German Patent DE10149086C1. For the reasons described below, this molding device, however, has a problem that it is difficult to produce annular shells with a high degree of precision.

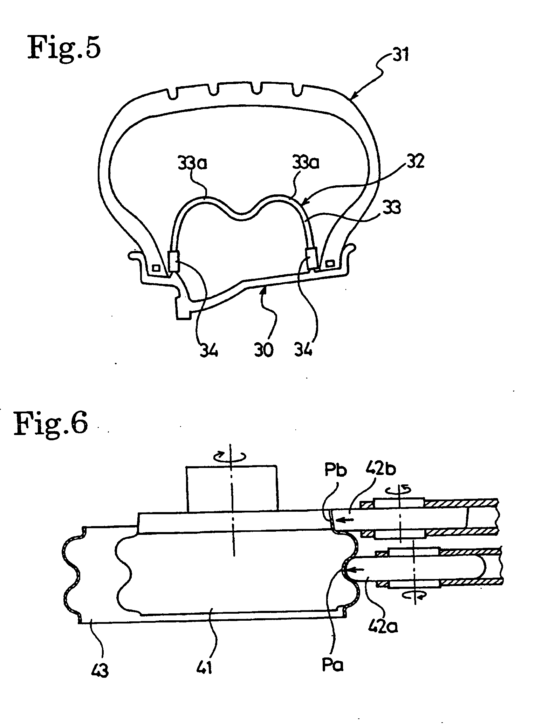

Namely, the foregoing molding device adopts the following configuration as shown in Fig. 6. An inner molding roller 41 and outer molding rollers 42a, 42b are respectively arranged to the inner diameter side and outer diameter side of a tubular blank 43, which has been provided by rolling up a metallic plate into a cylinder. By rotating these molding rollers, the circumferential wall of the tubular blank 43 is pressingly held therebetween and thus circumferentially continuous protruding parts are formed on the circumferential wall. However, the inner molding roller 41 is formed in such a way as to have an outer diameter that is smaller than the inner diameter of the tubular blank in order to facilitate attachment/detachment of the tubular blank to/from the inner molding roller. For this reason, during molding processing, the tubular blank 43 is held on one side by holding portions Pa and Pb where the outer molding rollers 42a, 42b respectively make contact with the inner molding roller 41. In this way the tubular blank vibrates, causing a reduction in processing accuracy. The generation of this vibration is more much likely to occur as the rotational speed of the molding rollers is increased, i.e., as the molding speed is increased, thus resulting in the reduction of productivity.

Devices of this kind are known from documents US-A-5 950 472, EP-A-1 484 440 and US-A-5 212 866.

### DISCLOSURE OF THE INVENTION

The object of the present invention is to provide a device for manufacturing a support body for run flat that can achieve stable, efficient provision of annular shells with highly accurate dimensions.

A device for manufacturing a support body for run flat of the present invention comprises the features of claim 1. It has inner and outer molding rollers to press the circumferential wall of a tubular blank between the inner and outer molding rollers that are rotated to form at least one circumferentially continuous protruding part on the circumferential wall of the tubular blank to process the tubular blank into an annular shell, wherein the inner molding roller has the maximum outer diameter that is substantially the same as the inner diameter of the tubular blank.

According to the present invention, as described above, the inner molding roller has the maximum outer diameter that is substantially the same as the inner diameter of a tubular blank, a workpiece. For this reason, the tubular blank is stably supported by the entire side surface of the inner molding roller and thus the tubular blank never vibrates during the molding processing. Thus, the prevention of vibration allows processing of the tubular blank into an annular shell with highly accurate dimensions. In addition, an annular shell with highly accurate dimensions can provide excellent ride comfort during run-flat driving. Furthermore, since stabilization in the molding processibility can increase the rotational speed of the molding rollers, it is possible to improve productivity.

The device according to the present invention is such that the inner molding roller adopts a structure that allows the roller to be disassembled into a plurality of parts.

The device according to the present invention further comprises a pair of supporting rollers arranged side by side and attached to a frame, for supporting the backside of the tubular blank, which is attached to the outside of the inner molding roller, opposite the side on which the outer molding roller is contacted under pressure with the tubular blank.

The term "tubular blank" as used in the present invention means an intermediate blank material before molded into an annular shell, a support body for run flat. In general, metallic materials are used for such an intermediate blank material. Although the production method for a tubular blank is not specifically limited, a tubular blank that is obtained by rolling up a rectangular-shaped flat metallic plate into a cylinder and welding the ends of the metallic plate together is preferable. Desirably, the welded portions are further polished for smoothness. Alternatively, a tubular body may be used that can be obtained by slicing a steel tube with a predetermined inner diameter into predetermined length pieces.

The metallic material constituting a tubular blank is not specifically limited as long as it has strength enough to support a vehicle during run-flat driving. In order to ensure excellent durability, however, a metallic material that produces a shear stress of 600 MPa or more, more preferably 800Mpa to 1200 Mpa, may be used. In particular, steel material is the most preferable one. The shape of the circumferential wall of a tubular blank is not specifically limited. However, a right circular cylindrical shape is preferable.

The thickness of the circumferential wall of a tubular blank is not specifically limited. However, the thickness is preferably in a range of 1.0mm to 2.0mm. If the thickness is below 1.0mm, although processibility is increased, durability will decrease. Meanwhile, if the thickness is above 2.0mm, the tire/wheel assembly becomes heavy, resulting in poor fuel economy.

In the present invention, a molding device for processing the tubular blank into an annular shell is constituted of inner and outer molding rollers. The inner molding roller has a molding surface on the outer surface that fits the molding surface of the outer inner roller. The circumferential wall of the tubular blank is held between the molding rollers. Thus, the molding rollers hold the circumferential wall of the tubular blank from the inside and outside and, with these molding rollers continuously rotating, at least one circumferentially continuous protruding part is formed on the circumferential wall of the tubular blank.

The inner molding roller is formed in such a way that it has the maximum outer diameter that is substantially the same as the inner diameter of the tubular blank to be attached to the outside thereof. By allowing the inner molding roller to have the maximum outer diameter that is substantially the same as the inner diameter of the tubular blank, the inner molding roller supports the tubular blank so as not to be wobbly. For this reason, the generation of vibration that occurs when the inner and outer molding rollers are rotated to process the tubular blank can be prevented, thereby making it possible to obtain annular shells with highly accurate dimensions. For such a vibration-preventing effect to occur, the maximum outer diameter of the inner molding roller may be as large as 95-100% of the inner diameter of the tubular blank.

On the other hand, since the inner molding roller has the maximum outer diameter that is substantially the same as the inner diameter of the tubular blank, attachment of the tubular blank to the inner molding roller and detachment of the resultant annular shell from the inner molding roller become difficult. In order to facilitate such attachment and detachment, the inner molding roller may adopt a structure that is assembled from a plurality of parts so as to be disassembled. Alternatively, the inner molding roller may adopt a structure that allows it to shrink in the radial direction.

Although only one outer molding roller is sufficient for the inner molding roller, a plurality of outer molding rollers may be arranged. The plurality of outer molding rollers may be arranged in series along the axial direction and sequentially used in succession. Alternatively, the plurality of outer molding rollers may be supported by a turret mechanism, and be used in succession. In addition, for example, the plurality of outer molding rollers may be composed of a combination of a molding roller for molding the intermediate region of a tubular blank and molding rollers for molding the right and left side regions of the tubular blank, wherein the intermediate region of the tubular blank is first molded with the molding roller for the intermediate region, and after a certain period time, the right and left side regions of the tubular blank are molded with the molding rollers for right and left side regions.

An annular shell produced as a result of processing of a tubular blank may have at least one protruding part. However, an annular shell preferably has two protruding parts. The protruding part(s) of an annular shell supports the entire inner surface of a pneumatic tire during run-flat driving. For this reason, if an annular shell has only one protruding part, the vehicle loading is concentrated on this protruding part and thereby shortens tire life. In addition, if an annular shell has three protruding parts, tire life is similarly shortened because the contact area of each protruding part is minimized.

### BRIEF DESCRIPTION OF THE DRAWINGS

Fig. 1 is a illustrative schematic diagram showing the device of the present invention for manufacturing a support body for run flat.
Fig. 2 is a front view only showing the principal portions of the manufacturing device shown in Fig. 1.
Fig. 3 is a side view showing an example of an inner molding roller used in the manufacturing device of the present invention.
Fig. 4 is a sectional view taken along Z-Z line in Fig. 3.
Fig. 5 is a lengthwise sectional view showing a tire/wheel structure incorporated with a support body for run flat, which is produced by the present invention.
Fig. 6 is a lengthwise sectional view showing a conventional device for manufacturing a support body for run flat.

### BEST MODE FOR CARRYING OUT THE INVENTION

Hereinafter, the present invention will be described in detail based on the embodiment shown in the drawings.

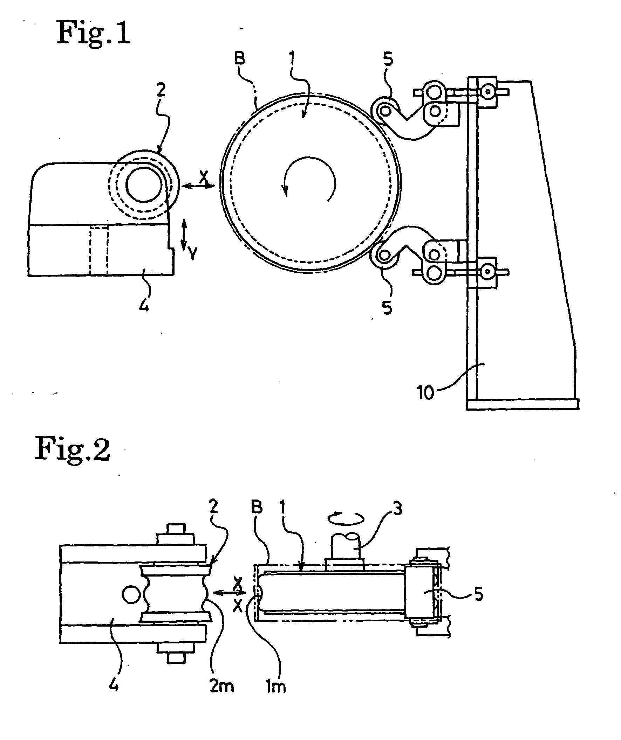

Fig. 1 illustrates the device for manufacturing a support body for run flat, which processes a tubular blank into an annular shell. Fig. 2 is a front view of the principal portion of the manufacturing device.

In the drawings, reference numeral 1 denotes an inner molding roller, and reference numeral 2 denotes an outer molding roller. The inner molding roller 1 has, on the outer surface, a molding surface 1m having protruding and recess parts, and is rotated and driven by a drive shaft 3. Meanwhile, the outer molding roller 2 has a molding surface 2m that fits the molding surface 1m of the inner molding roller 1, and is freely rotatively supported by a moving device 4. The moving device 4 reciprocates in the horizontal direction X to cause the outer molding roller 2 to come in contact with the inner molding roller 1, and reciprocates in the vertical direction Y

The molding surface 1m of the inner molding roller 1 has a curved shape that fits the shape of the molding surface 2m of the outer molding roller 2. The molding surface 1m has a circumferentially continuous protruding curved part on both right and left sides, and a circumferentially continuous recess curved part on the center. By contrast, the molding surface 2m of the outer molding roller 2 has circumferentially continuous recess curved parts on both left and right sides, and a circumferentially continuous protruding curved part on the center.

The inner molding roller 1 has a structure that allows attachment of a tubular blank B, a workpiece, to the outside. The inner molding roller 1 is formed in such a way that it has the maximum outer diameter that is substantially the same as the inner diameter of the tubular blank B. A pair of supporting rollers 5, 5, arranged side by side and attached to a frame 10, supports the backside of the tubular blank B attached to the outside of the inner molding roller 1.

Processing of the tubular blank B into an annular shell using the foregoing manufacturing device follows the procedure described below.

As shown in Figs. 1 and 2, the tubular blank B is first attached to the outside of the inner molding roller 1. Next, while rotating and driving the inner molding roller 1 using the drive shaft 3, a high pressure is applied to the front side of the tubular blank B using the outer molding roller 2. As the application of a high pressure using the outer molding roller 2 causes the circumferential wall of the tubular blank B to be pressingly held between the inner and outer molding rollers 1 and 2, two circumferentially continuous protruding parts are formed, one on the right and the other on the left of the circumferential wall. In this way an annular shell 33 with an outer surface as shown in Fig. 5 is formed.

During the molding processing, the inner molding roller 1 supports the entire inner surface of the tubular blank B with its entire side surface having maximum outer diameter in ways that the tubular blank B is not wobbly. For this reason, the tubular blank B can be molded into an annular shell without causing it to vibrate. Accordingly, the tubular blank B can be molded into an annular shell with highly accurate dimensions. In addition, since the generation of vibration is inhibited during the processing, high-speed molding can be achieved and thus it is possible to increase productivity

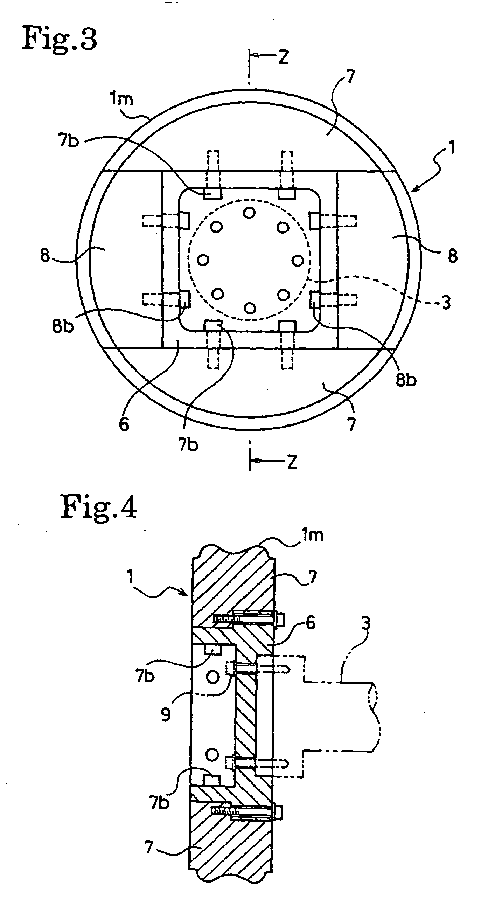

Figs. 3 and 4 show details of the inner molding roller used in the molding device.

The inner molding roller 1 adopts a structure that the roller is assembled from a plurality of parts so as to be disassembled. In other words, the inner molding roller 1 has a structure in which a core part 6 is provided at the center and outer parts 7, 7; 8, 8, each of which has an arc-shaped molding surface 1m, are arranged on each of four sides of the core part 6. The four outer parts 7, 7; 8, 8 are freely detachably connected to the core part 6 by means of bolts 7b; 8b. In addition, the drive shaft 3 is freely detachably connected to the core part 6 by means of bolts 9.

As described above, the inner molding roller 1 has a structure that is assembled from a plurality of parts so as to be disassembled. Accordingly, by disassembling the inner molding roller 1 into individual parts, the tubular blank B can be readily attached to the inner molding roller 1, and an annular shell produced as a result of molding can be readily detached from the inner molding roller 1 even when the maximum outer diameter of the inner molding roller 1 is substantially the same as the inner diameter of the tubular blank B.

The configuration of an inner molding roller that facilitates attachment of a tubular blank to the inner molding roller, or detachment of an annular shell from the inner molding roller is not limited to the illustrated embodiment. For example, an inner molding roller having a structure that an outer diameter of the inner molding roller is radially shrinkable may be used.

As described above, according to the present invention, the maximum outer diameter of the inner molding roller is substantially the same as the inner diameter of the tubular blank, a workpiece. Thus, the inner molding roller can stably support the tubular blank with its entire side surface in ways the tubular blank is not wobbly. Furthermore, the generation of vibration can be inhibited during the molding processing. Inhibition of the generation of vibration allows a tubular blank to be molded into an annular shell with highly accurate dimensions. Moreover, since such an annular shell has excellent dimensional accuracy, vibration caused during run-flat driving is reduced and thus it is possible to provide excellent ride comfort. Furthermore, since it is possible to increase the rotational speed of the molding rollers, productivity can be improved.

## Claims

1. A device for manufacturing a support body for run flat, which comprises inner (1) and outer molding rollers (2) to press the circumferential wall of a tubular blank (B) between the inner (1) and outer molding rollers (2) that are rotated to form at least one circumferentially continuous protruding part on the circumferential wall of the tubular blank (B) to process the tubular blank (B) into an annular shell,
wherein the maximum outer diameter of the inner molding roller (1) is substantially the same as the inner diameter of the tubular blank (B),
wherein
the inner molding roller (1) adopts a structure that allows the roller (1) to be disassembled into a plurality of parts, and
the device further comprises a pair of supporting rollers (5) arranged side by side and attached to a frame (10), for supporting the backside of the tubular blank (B), which is attached to the outside of the inner molding roller (1), opposite the side on which the outer molding roller (2) is contacted under pressure with the tubular blank (B).

2. The device for manufacturing a support body for run flat according to claim 1, wherein the maximum outer diameter of the inner molding roller (1) is set to be as large as 95% to 100% of the inner diameter of the tubular blank (B).

3. The device for manufacturing a support body for run flat according to claim 1 or 2, wherein the inner molding roller (1) comprises a core part (6) provided at the center and four outer parts (7; 8), each of which has an arc-shaped molding surface (1m), and which are each arranged on one of four sides of the core part (6) by means of bolts (7b, 8b).

## Patentansprüche

1. Vorrichtung zur Herstellung eines Stützkörpers für einen Notlaufreifen, welcher innere (1) und äußere Formungswalzen (2) aufweist um die Umfangswand eines schlauchförmigen Formlings (B) zwischen den inneren (1) und äußeren Formungswalzen (2) einzupressen, welche so rotiert werden, dass sie zumindest einen in der Umfangsrichtung kontinuierlich vorstehenden Teil an der Umfangswand des schlauchförmigen Formlings (B) ausformen, um den schlauchförmigen Formling (B) zu einem ringförmigen Mantel zu verarbeiten, wobei der maximale äußere Durchmesser der inneren Formungswalze (1) im Wesentlichen der gleiche ist wie der innere Durchmesser des schlauchförmigen Formlings (B), wobei die innere Formungswalze (1) eine Struktur annimmt, welche es der Walze (1) ermöglicht in eine Mehrzahl von Teilen auseinander genommen zu werden, und
wobei die Vorrichtung weiterhin ein Paar von Stützwalzen (5) umfasst, welche Seite an Seite angeordnet und an einem Rahmen (10) angebracht sind, zur Stützung der Rückseite des schlauchförmigen Formlings (B), welcher an der Außenseite der inneren Formungswalze (1) angebracht ist, gegenüberliegend zu der Seite, auf welcher die äußere Formungswalze (2) unter Druck mit dem schlauchförmigen Formling (B) kontaktiert ist.

2. Vorrichtung zum Herstellen eines Stützkörpers für einen Notlaufreifen gemäß Anspruch 1, wobei der maximale äußere Durchmesser der inneren Formungswalze (1) so festgelegt ist, dass er so groß wie 95 % bis 100 % des inneren Durchmessers des schlauchförmigen Formlings (B) ist.

3. Vorrichtung zum Herstellen eines Stützkörpers für einen Notlaufreifen gemäß Anspruch 1 oder 2, wobei die innere Formungswalze (1) ein Kernteil (6) umfasst, welches in der Mitte vorgesehen ist, und vier äußere Teile (7, 8), von denen jedes eine bogenförmige Formungsoberfläche (1m) aufweist, und welche jeweils an einer der vier Seiten des Kernteils (6) mittels Bolzen (7b, 8b) angeordnet sind.

## Revendications

1. Dispositif pour fabriquer d'un corps de support pour des pneus à flancs renforcés, qui comprend des rouleaux de moulage intérieur (1) et extérieur (2) pour presser la paroi circonférentielle d'une ébauche tubulaire (B) entre les rouleaux de moulage intérieur (1) et extérieur (2) qui sont entraînés en rotation pour former au moins une partie saillante circonférentiellement continue sur la paroi circonférentielle de l'ébauche tubulaire (B) pour travailler l'ébauche tubulaire (B) en une coque annulaire,
où le diamètre extérieur maximal du rouleau de moulage intérieur (1) est sensiblement le même que le diamètre intérieur de l'ébauche tubulaire (B),
où le rouleau de moulage intérieur (1) adopte une structure qui permet au rouleau (1) d'être démonté en plusieurs parties et
le dispositif comprend en outre deux rouleaux de support (5) agencés côte-à-côte et fixés à un cadre (10) pour supporter le côté arrière de l'ébauche tubulaire (B) qui est fixée à l'extérieur du rouleau de moulage intérieur (1), opposée au côté sur lequel le rouleau de moulage extérieur (2) est mis en contact sous pression avec l'ébauche tubulaire (B).

2. Dispositif pour fabriquer un corps de support pour des pneus à flancs renforcés selon la revendication 1, où le diamètre extérieur maximal du rouleau de moulage intérieur (1) est réglé pour être aussi grand que 95% à 100% du diamètre intérieur de l'ébauche tubulaire (B).

3. Dispositif pour fabriquer un corps de support pour des pneus à flancs renforcés selon la revendication 1 ou 2, où le rouleau de moulage intérieur (1) comprend une partie de noyau (6) réalisée au centre et quatre parties extérieures (7; 8) dont chacune possède une surface de moulage en forme d'arc (1m), et qui sont chacune agencées sur un des quatre côtés de la partie de noyau (6) par des boulons (7b, 8b).
